# EUROPÄISCHE PATENTSCHRIFT

(11) **EP 1 031 252 B1**
(45) Veröffentlichungstag und Bekanntmachung des Hinweises auf die Patenterteilung: **12.03.2003**
(21) Anmeldenummer: 98963330.0
(22) Anmeldetag: 06.11.1998
(51) Int. Cl.: H04Q 7/38, H04Q 7/22

(54) **VERFAHREN ZUR NUTZUNG VON EINER ZENTRALE ANGEBOTENER DIENSTE DURCH EIN ENDGERÄT UND ENDGERÄT DAFÜR**
METHOD FOR UTILIZING SERVICES OFFERED BY A CONTROL CENTER VIA A TERMINAL, AND CORRESPONDING TERMINAL
PROCEDE POUR L'UTILISATION PAR UN TERMINAL DE SERVICES OFFERTS PAR UNE UNITE CENTRALE, ET TERMINAL A CET EFFET

(30) Priorität: 14.11.1997 DE 19750366
(43) Veröffentlichungstag der Anmeldung: 30.08.2000
(73) Patentinhaber: ROBERT BOSCH GMBH, 70442 Stuttgart (DE)
(72) Erfinder: KYNAST, Andreas, D-31139 Hildesheim (DE); KERSKEN, Ulrich, D-31199 Diekholzen (DE)
(86) Internationale Anmeldenummer: DE9803236
(87) Internationale Veröffentlichungsnummer: WO99026442

(56) Entgegenhaltungen:
- EP-A- 0 706 295
- GB-A- 2 308 039
- US-A- 5 046 082

## Beschreibung

Die Erfindung geht von einem Verfahren zur Nutzung von einer Zentrale angebotener Dienste durch ein Endgerät nach der Gattung des unabhängigen Anspruchs 1 und von einem Endgerät nach der Gattung des unabhängigen Anspruchs 11 aus.

Ein Verfahren zur Nutzung von einer Zentrale angebotener Dienste durch ein Endgerät ist beispielsweise in Form von Telephonbanking bereits bekannt.

Es sind auch bereits als Mobilfunkgeräte ausgebildete Endgeräte bekannt, die eine Bedieneinheit und eine Sende-/Empfangseinrichtung zum Senden und Empfangen von Daten über ein Datennetz umfassen.

Aus der GB 2308039 A ist ein Telekommunikationssystem bekannt, das einen Diensteanbieter umfasst, der eine Vielzahl von Diensten einer Vielzahl von Endgeräten anbietet. Ein Controller umfaßt eine Benutzerkennung und kann von einer Lesevorrichtung eines Endgerätes ausgelesen werden. Im Endgerät können ein oder mehrere Dienste ausgewählt werden, die mit der Nutzerkennung verknüpft sind. Ein Sender überträgt Diensteinformationen dieses Benutzers zum Diensteanbieter, die die Nutzerkennung und Informationen über die ausgewählten Dienste umfassen. Der Diensteanbieter empfängt die Diensteinformationen des Benutzers und ermittelt den Bereich, aus dem die Diensteinformation des Benutzers übertragen wurde. Eine Steuerung des Diensteanbieters ermittelt, daß ein bestimmter Dienst dem Benutzer zur Verfügung gestellt werden muß. Über eine Paginginformation überträgt der Diensteanbieter Informationen, die den Diensteinformationen des Benutzers entsprechen an das Endgerät des Benutzers. Das Endgerät empfängt die Pagingmeldung und antwortet an den Diensteanbieter, ob es den Dienst annehmen kann. Als Teil der Registrierungsprozedur wird dabei eine Endgerätekennung zum Diensteanbieter übertragen. Diese Endgerätekennung wird mit dem entsprechenden Satz an ausgewählten Diensten und der entsprechenden Nutzerkennung in einem Speicher des Diensteanbieters gespeichert unter Aufrechterhaltung der Zuordnungen. Die Endgerätekennung wird zusammen mit einer Information über den erfolgreichen Status der Registrierung vom Diensteanbieter zum Endgerät übertragen. Wenn dann der Diensteanbieter eine Anforderung für einen bestimmten Dienst und eine bestimmte Nutzerkennung empfängt, so prüft die Steuerung des Diensteanbieters, ob der Nutzer für diesen Dienst berechtigt ist. Bei Berechtigung ermittelt der Diensteanbieter in seinem Speicher die Endgerätekennung, die mit der Diensteauswahl für diese Nutzerkennung verknüpft ist und den angeforderten Dienst umfaßt. Die Endgerätekennung wird dann in diejenige Zelle übertragen, in der das Endgerät sich befindet, um dem Endgerät eine Paging-Meldung zu senden.

Aus der EP 0706295 A2 ist ein Datenverarbeitungssystem eines Fahrzeugs bekannt, das mit einem Informationscenter kommunizieren kann. Bei diesem Datenverarbeitungssystem können die erforderlichen Daten in das System beim Benutzer zuhause eingegeben werden, selbst dann, wenn der Datenprozessor im Fahrzeug, wie beispielsweise ein Navigationssystem oder dergleichen, nicht aktiv ist.

Vorteile der Erfindung

Das erfindungsgemäße Verfahren mit den Merkmalen des unabhängigen Anspruchs 1 und das Endgerät mit den Merkmalen des unabhängigen Anspruchs 11 haben demgegenüber den Vorteil, daß vom ersten Endgerät Aktivierungsdaten über ein erstes Datennetz an die Zentrale übertragen werden, dass mittels der Aktivierungsdaten eine Dienstekennung und eine Endgerätekennung, die den Typ und den Leistungsumfang des ersten Endgerätes kennzeichnet, an die Zentrale übertragen werden, dass in Abhängigkeit der Dienstekennung ein Dienst in der Zentrale ausgewählt wird, dass in Abhängigkeit der Endgereätekennung von der Zentrale dem ausgewählten Dienst entsprechende Dienstedaten gesendet werden, so dass sie bei Empfang durch das erste Endgerät erkannt werden und Funktionen zur Realisierung des ausgewählten Dienstes am ersten Endgerät auslösen und dass die Dienstedaten von der Zentrale an das erste Endgerät über das erste Datennetz übertragen werden. Auf diese Weise ist die Nutzung sehr komplexer Dienste mit Endgeräten möglich, die nur über eingeschränkte Eingabemöglichkeiten verfügen. Für die Nutzung eines solchen komplexen Dienstes ist dabei lediglich die Eingabe einer dem auszuwählenden Dienst zugeordneten Dienstekennung an der Bedieneinheit des Endgerätes erforderlich. Eine solche Eingabe einer Dienstekennung kann dabei in einfachster Weise mittels einer Zehnertastatur des Endgerätes erfolgen.

Ein weiterer Vorteil besteht bei Verwendung eines erfindungsgemäßen Endgerätes in einem Fahrzeug, da der Fahrer nur die Dienstekennung zur Aktivierung des von ihm gewünschten Dienstes an der Bedieneinheit des Endgerätes eingeben muß und dadurch in seiner Aufmerksamkeit für den Straßenverkehr nicht wesentlich beeinträchtigt wird, so daß die Verkehrssicherheit bei der Bedienung eines solchen Endgerätes erhöht wird.

Ein weiterer Vorteil besteht darin, daß durch die bloße Eingabe der Dienstekennung an der Bedieneinheit des Endgerätes zur Aktivierung des zugehörigen gewünschten Dienstes im Endgerät keine Informationen und Parameter über den zu aktivierenden Dienst gespeichert sein müssen, so daß Speicherplatz im Endgerät eingespart wird. Das Endgerät kann unabhängig von den von der Zentrale angebotenen Dienste realisiert werden, da die von der Zentrale erzeugten Dienstedaten an die Möglichkeiten und den Leistungsumfang des den entsprechenden Dienst anfordernden Endgerätes angepaßt werden. Auf diese Weise ist im Endgerät zur Realisierung des erfindungsgemäßen Verfahrens kein Mehraufwand erforderlich, so daß herkömmliche Endgeräte eingesetzt werden können und kein zusätzlicher Herstellungs-, Material- und Platzaufwand für das Endgerät besteht.

Durch die in den Unteransprüchen aufgeführten Maßnahmen sind vorteilhafte Weiterbildungen und Verbesserungen des im unabhängigen Anspruch 1 angegebenen Verfahrens und des im unabhängigen Anspruch 11 angegebenen Endgerätes möglich.

Vorteilhaft ist es, daß mittels der Aktivierungsdaten eine Nutzerkennung an die Zentrale übertragen wird und daß die Dienstedaten nur dann von der Zentrale an das erste Endgerät übertragen werden, wenn die Nutzerkennung mit in der Zentrale abgespeicherten Nutzerdaten übereinstimmt. Somit wird auf einfache Weise eine Überprüfung der Zugangsberechtigung für die von der Zentrale angebotenen Dienste ermöglicht. Die Zugangsberechtigung kann dabei auch besonders schnell überprüft werden, da die Nutzerkennung bereits mit den Aktivierungsdaten an die Zentrale übertragen wird.

Ein weiterer Vorteil besteht darin, daß vom ersten Endgerät ein Aufforderungssignal mit der Endgerätekennung und/oder Nutzerkennung über das erste Datennetz an die Zentrale übertragen wird und daß von der Zentrale in Abhängigkeit des empfangenen Aufforderungssignals ein Dienstekennungssignal über das erste Datennetz an das erste Endgerät übertragen wird, wobei das Dienstekennungssignal Dienstekennungen von durch das erste Endgerät nutzbaren Diensten der Zentrale umfaßt. Auf diese Weise erhält der Benutzer des Endgerätes einen Überblick über die nutzbaren Dienste der Zentrale und deren Dienstekennungen, die er für spätere Auswahlvorgänge gegebenenfalls auch im Endgerät abspeichern kann, so daß die Übersichtlichkeit und der Bedienkomfort des Endgerätes erhöht werden. Aufgrund der ihm von der Zentrale zur Verfügung gestellten Dienstekennungen der durch das Endgerät nutzbaren Dienste und gegebenenfalls deren Abspeicherung im Endgerät muß der Benutzer sich nicht mehr die von seinem Endgerät nutzbaren Dienste selbst merken.

Ein weiterer Vorteil besteht darin, daß mittels der Aktivierungsdaten Zusatzdaten über einen Zustand und/oder Ort des ersten Endgerätes an die Zentrale übertragen werden und daß die Dienstedaten in Abhängigkeit der Zusatzdaten von der Zentrale erzeugt werden, so daß der Zustand und/oder der Ort des ersten Endgerätes bei der Realisierung des ausgewählten Dienstes am ersten Endgerät berücksichtigt wird. Auf diese Weise kann ein Teil der für die Konfiguration eines Dienstes notwendigen Daten automatisch durch das Endgerät erzeugt und an die Zentrale weitergeleitet werden. Dadurch können zustands- und/oder ortsabhängige Daten des Endgerätes bei der Aktivierung eines entsprechend gewünschten Dienstes berücksichtigt werden.

Ein weiterer Vorteil besteht darin, daß die Dienstekennung, die Endgerätekennung und/oder die Nutzerkennung zu einer einzigen gemeinsamen Kennung zusammengefaßt werden. Auf diese Weise läßt sich die Auswahl eines gewünschten Dienstes und die Erstellung der an die Möglichkeiten und den Leistungsumfang des Endgerätes angepaßten Dienstedaten vereinfachen und zeitsparend in einen einzigen Vorgang in der Zentrale zusammenfassen.

Ein weiterer Vorteil besteht darin, daß von einem zweiten Endgerät Dienstekonfigurationsdaten mit Parametern zur Einstellung eines vom ersten Endgerät nutzbaren und von der Zentrale angebotenen Dienstes über ein zweites Datennetz an die Zentrale übertragen werden, daß mit den Dienstekonfigurationsdaten die Endgerätekennung und/oder die Nutzerkennung des ersten Endgerätes an die Zentrale übertragen wird, daß von den Dienstekonfigurationsdaten Dienstedaten abgeleitet und mit der Endgerätekennung und/oder mit der Nutzerkennung in der Zentrale gespeichert werden und daß eine Dienstekennung den Dienstedaten zugeordnet, mit ihnen in der Zentrale abgespeichert und über das zweite Datennetz an das zweite Endgerät übertragen wird. Auf diese Weise können an einem ersten Endgerät mit eingeschränkter Eingabemöglichkeit nutzerkonfigurierte Dienste durch einfache Eingabe der zugehörigen Dienstekennung an der Bedieneinheit aktiviert werden, ohne daß zuvor eine Konfiguration dieser Dienste am ersten Endgerät durchgeführt werden muß. Vielmehr läßt sich zur Konfiguration solcher Dienste ein in seiner Eingabemöglichkeit nicht eingeschränktes zweites Endgerät verwenden, der Dienst selbst jedoch trotzdem an dem in seiner Eingabemöglichkeit eingeschränkten ersten Endgerät nutzen. Auf diese Weise wird die Funktionalität des ersten Endgerätes erhöht, ohne daß ein Mehraufwand bei der Herstellung des ersten Endgerätes erforderlich wäre.

Ein weiterer Vorteil ergibt sich wiederum bei Verwendung des ersten Endgerätes in einem Fahrzeug. Dabei kann der Fahrer vor Antritt der Fahrt über das zweite Endgerät einen Dienst in der Zentrale konfigurieren und diesen Dienst während der Fahrt lediglich durch Eingabe der Dienstekennung am ersten Endgerät aktivieren. Eine aufwendige Nutzerkonfiguration während der Fahrt entfällt und ein in seiner Eingabemöglichkeit eingeschränktes, erstes Endgerät kann zur Aktivierung und Nutzung dieses Dienstes im Fahrzeug mitgeführt werden. Die Aufmerksamkeit des Fahrers wird somit während der Fahrt nicht durch die Konfiguration des Dienstes in Anspruch genommen und den eingeschränkten Platzverhältnissen im Fahrzeug wird durch Verwendung des durch Einschränkung seiner Eingabemöglichkeiten platzsparenden ersten Endgerätes Rechnung getragen.

Ein weiterer Vorteil besteht darin, daß mit den Dienstekonfigurationsdaten Angaben über Ausgabemöglichkeiten des ersten Endgerätes und/oder über vorgebbare Ausgabeformen übertragen werden. Auf diese Weise lassen sich die Dienstedaten bei Auswahl eines entsprechenden Dienstes durch das erste Endgerät an die Ausgabemöglichkeiten und/oder an Ausgabevorlieben des Benutzers in Form von verschiedenen vorgebbaren Ausgabeformen von beispielsweise Sprachausgabe bzw. Datenanzeige an einem Display des ersten Endgerätes anpassen.

Ein weiterer Vorteil besteht darin, daß für das erste und das zweite Datennetz ein gemeinsames Datennetz verwendet wird. Auf diese Weise wird eine hohe Flexibilität bei der Verwendung von Datennetzen zur Übertragung der Dienstekonfigurationsdaten, der Dienstedaten, der Aktivierungsdaten und des Aufforderungssignals ermöglicht. Außerdem läßt sich das erfindungsgemäße Verfahren auch mit geringstmöglichem Bedarf an Datennetzen realisieren.

Ein weiterer Vorteil besteht darin, daß mit den an das erste Endgerät übertragenen Dienstedaten in Abhängigkeit eines am zweiten Endgerät vorgegebenen und mit den Dienstekonfigurationsdaten an die Zentrale übertragenen Zielortes und eines vom ersten Endgerät mit den Zusatzdaten an die Zentrale übertragenen aktuellen Ortes des ersten Endgerätes eine Überwachung der Verkehrslage vom aktuellen Ort des ersten Endgerätes bis zum Zielort am ersten Endgerät realisiert wird. Auf diese Weise läßt sich besonders bei Einsatz des ersten Endgerätes in einem Fahrzeug auf einfache Weise eine Überwachung der Verkehrslage realisieren, die vom Benutzer bzw. Fahrer ein Minimum an Aufmerksamkeit bei einem Maximum an vom ersten Endgerät empfangenen Verkehrsinformationen erfordert.

Vorteilhaft ist auch ein Endgerät, an dessen Bedieneinheit mindestens ein Text, vorzugsweise über eine alphanumerische Tastatur, eingebbar ist, bei dem der mindestens eine Text einer Dienstekennung zuordenbar ist und bei dem der mindestens eine Text im Speicher ablegbar und nach Einstellung eines Betriebsmodus, in dem eine Dienstekennung an der Bedieneinheit eingebbar ist, an der Ausgabeeinheit ausgebbar ist. Auf diese Weise lassen sich die Dienstekennungen vom Benutzer besser identifizieren, so daß eine schnellere und weniger Aufmerksamkeit erfordernde Auswahl und Aktivierung eines Dienstes am Endgerät durch den Benutzer möglich ist, was insbesondere bei Anordnung des Endgerätes in einem Fahrzeug während der Fahrt zu keiner wesentlichen Beeinträchtigung der Verkehrssicherheit aufgrund der vernachlässigbaren Ablenkung des Fahrers bei der entsprechenden Bedienung des Endgerätes zur Aktivierung des gewünschten Dienstes führt.

Ein weiterer Vorteil besteht darin, daß sämtliche im Speicher gespeicherten Texte in dem Betriebsmodus an der Ausgabeeinheit ausgebbar sind, daß einer der ausgebbaren Texte an der Bedieneinheit auswählbar ist und daß nach Auswahl eines Textes die Sende-/Empfangseinheit Aktivierungsdaten mit einer dem ausgewählten Text zugeordneten Dienstekennung absendet. Auf diese Weise wird die Übersichtlichkeit für den Benutzer bei der Auswahl eines Dienstes am Endgerät erhöht, so daß eine schnellere Auswahl möglich ist und eine geringere Ablenkung des Benutzers erfordert wird, was sich besonders im Straßenverkehr positiv auf die Verkehrssicherheit auswirkt.

Ein weiterer Vorteil besteht darin, daß an der Bedieneinheit mindestens eine Taste vorgesehen ist, der eine Dienstekennung zuordenbar ist, und daß nach Betätigung der mindestens einen Taste die Sende-/Empfangseinheit Aktivierungsdaten mit der zugeordneten Dienstekennung absendet. Auf diese Weise kann eine Zuordnung der Dienstekennungen zu Tasten des Endgerätes, beispielsweise zu Stationstasten eines Autoradios mit integriertem Telephon, erfolgen. Die Zuordnung von bestimmten Dienstekennungen auf solche Tasten erleichtert die Auswahl vor allem von sehr häufig genutzten Diensten.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer Zentrale, eines ersten und eines zweiten Endgerätes, Figur 2a), 2b) und 2c) jeweils ein Beispiel für die Ausbildung von Aktivierungsdaten, Figur 3 einen Ablaufplan für eine Steuerung des zweiten Endgerätes, Figur 4 einen Ablaufplan für eine Steuerung des ersten Endgerätes und Figur 5 einen Ablaufplan für eine Steuerung der Zentrale.

### Beschreibung des Ausführungsbeispiels

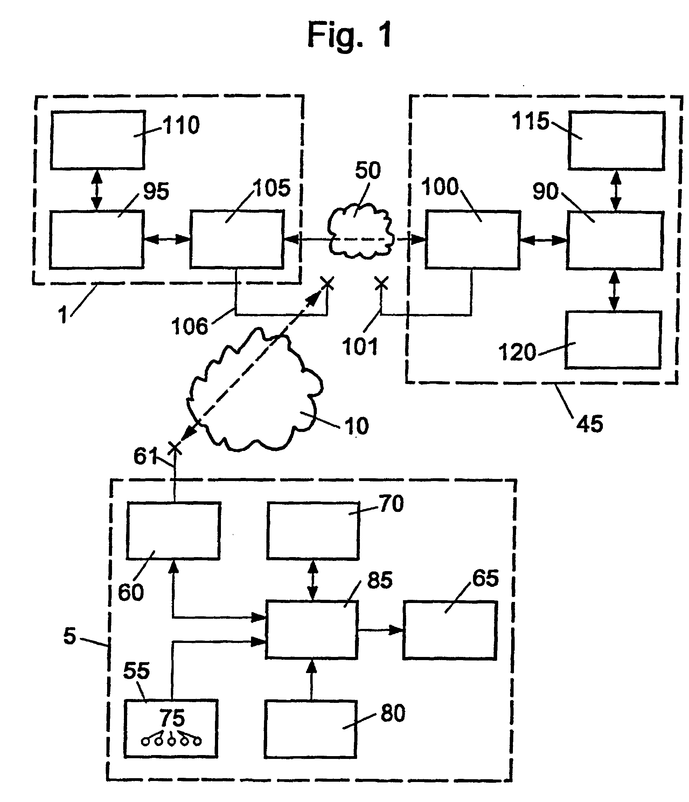

In Figur 1 kennzeichnet 1 eine Zentrale, die von einem Diensteanbieter betrieben werden kann. Die Zentrale 1 umfaßt eine Steuerung 95, an die ein Speicher 110 und eine Sende-/Empfangseinrichtung 105 angeschlossen sind. Mit der Sende-/Empfangseinrichtung 105 ist eine Sende-/Empfangsantenne 106 verbunden. Die Zentrale 1 kann zusätzlich mit weiteren Dienste- oder Datenanbietern verbunden sein.

In Figur 1 kennzeichnet 5 ein beispielsweise als Autoradio mit integriertem Funktelephon ausgebildetes erstes Endgerät. Das erste Endgerät 5 kann jedoch beispielsweise auch als Mobilfunkgerät, Mobiltelephon, als Schnurlostelephon, als Betriebsfunkgerät, als Handfunkgerät, als Notebook mit Funkmodul oder dergleichen ausgebildet sein. Auch eine Ausbildung als drahtgebundenes Telephonendgerät ist möglich. Das erste Endgerät 5 umfaßt eine Steuerung 85, an die eine Bedieneinheit 55 mit Tasten 75, eine Sende-/Empfangseinrichtung 60, eine Ausgabeeinheit 65, ein Speicher 70 und ein beispielsweise als GPS-Empfänger (Global Positioning System) ausgebildeter Empfänger 80 für Ortungsdaten angeschlossen sind. Die Bedieneinheit 55 kann auch eine Spracheingabe anstelle oder zusätzlich zu den Tasten 75 umfassen. Die Sende-/Empfangseinrichtung 60 des ersten Endgerätes 5 ist zudem mit einer Sende-/Empfangsantenne 61 verbunden. Ein Datenaustausch zwischen der Zentrale 1 und dem ersten Endgerät 5 ist über ein erstes Datennetz 10 möglich, das beispielsweise als Funktelephonnetz ausgebildet sein kann, so daß zwischen der Zentrale 1 und dem ersten Endgerät 5 Daten über die Sende-/Empfangsantenne 61 des ersten Endgerätes 5 und die Sende-/Empfangsantenne 106 der Zentrale 1 ausgetauscht werden können. Bei dem ersten Datennetz 10 kann es sich jedoch auch um ein herkömmliches drahtgebundenes Telephonnetz oder ein beliebiges Datennetz handeln.

In Figur 1 kennzeichnet 45 ein beispielsweise als Personal Computer ausgebildetes zweites Endgerät, das jedoch auch als Laptop, als Komforttelephonendgerät oder dergleichen ausgebildet sein kann. Das zweite Endgerät 45 umfaßt eine Steuerung 90, an die eine Sende-/Empfangseinrichtung 100, ein Speicher 115 und eine Eingabe-/Ausgabeeinheit 120 angeschlossen sind. Die Sende-/Empfangseinrichtung 100 des zweiten Endgerätes 45 kann zudem mit einer Sende-/Empfangsantenne 101 verbunden sein. Zwischen der Sende-/Empfangseinrichtung 105 der Zentrale 1 und der Sende-/Empfangseinrichtung 100 des zweiten Endgerätes 45 ist ein Datenaustausch über ein zweites Datennetz 50 möglich, das ebenfalls als Funktelephonnetz, als drahtgebundenes Telephonnetz oder als beliebiges Datennetz ausgebildet sein kann. Bei Ausbildung des zweiten Datennetzes 50 als Funktelephonnetz kann zwischen der Zentrale 1 und dem zweiten Endgerät 45 über die Sende-/Empfangsantenne 106 der Zentrale 1 und die Sende-/Empfangsantenne 101 des zweiten Endgerätes 45 ein Datenaustausch erfolgen. In dem gemäß Figur 1 dargestellten Ausführungsbeispiel ist das zweite Datennetz 50 jedoch als drahtgebundenes Telephonnetz ausgebildet, an das sowohl die Sende-/Empfangseinrichtung 105 der Zentrale 1 als auch die Sende-/Empfangseinrichtung 100 des zweiten Endgerätes 45 angeschlossen sind. Es kann auch vorgesehen sein, den Datenaustausch zwischen der Zentrale 1 und dem ersten Endgerät 5 und den Datenaustausch zwischen dem zweiten Endgerät 45 und der Zentrale 1 mittels eines einzigen Datennetzes zu realisieren.

Der Speicher 70 des ersten Endgerätes 5, der Speicher 110 der Zentrale 1 und der Speicher 115 des zweiten Endgerätes 45 können als nichtflüchtige Schreib-/Lesespeicher ausgebildet sein. Für die Steuerung 85 des ersten Endgerätes 5, die Steuerung 90 des zweiten Endgerätes 45 und die Steuerung 95 der Zentrale 1 kann jeweils ein Mikroprozessor Verwendung finden. Die Ausgabeeinheit 65 des ersten Endgerätes 5 und die Eingabe-/Ausgabeeinheit 120 des zweiten Endgerätes 45 können jeweils eine als Display ausgebildete Anzeigevorrichtung und/oder mindestens einen Lautsprecher zur akustischen Wiedergabe von Daten umfassen. In dem gewählten Ausführungsbeispiel nach Figur 1 umfaßt die Bedieneinheit 55 des ersten Endgerätes 5 fünf Tasten 75 und gegebenenfalls weitere Bedienelemente, wie zum Beispiel eine vorzugsweise alphanumerische Zehnertastatur und/oder Cursortasten.

Portable und mobile Endgeräte haben häufig eingeschränkte Eingabemöglichkeiten. Außerdem sind geringe Datenübertragungsraten vorhanden und/oder die Kommunikationszeiten sind sehr teuer. Trotzdem soll die Nutzung von der Zentrale 1 angebotener Dienste mit solchen Endgeräten möglich sein. Das Konfigurieren bzw. das Starten vor allem von komplexen Diensten erfordert vielfach die Vorgabe von nutzerabhängigen Parametern, wie beispielsweise Nutzerpräferenzen. Viele Nutzer verfügen neben einem Endgerät mit eingeschränkten Eingabemöglichkeiten über ein weiteres Endgerät mit besserer Eingabemöglichkeit, beispielsweise über einen Personal Computer. Dennoch soll die Aktivierung von gegebenenfalls komplexen nutzerkonfigurierten Diensten durch ein in der Eingabemöglichkeit eingeschränktes Endgerät erfolgen. Zur Konfiguration eines solchen Dienstes durch den Nutzer kann dabei das weitere Endgerät mit besserer Eingabemöglichkeit herangezogen werden.

Im Ausführungsbeispiel gemäß Figur 1 stellt das erste Endgerät 5 ein Endgerät mit eingeschränkter Eingabemöglichkeit dar. Das zweite Endgerät 45, das gemäß dem Ausführungsbeispiel als Personal Computer ausgebildet sein kann, stellt dahingegen ein weiteres Endgerät mit besserer Eingabemöglichkeit dar. Die Aktivierung von nutzerkonfigurierten Diensten soll also am ersten Endgerät 5 mit eingeschränkter Eingabemöglichkeit erfolgen. Für eine solche Aktivierung ist die Eingabe einer Dienstekennung 15 am ersten Endgerät 5 vorgesehen. Die Konfiguration eines Dienstes erfolgt hingegen mit Hilfe des zweiten Endgerätes 45, welches die dafür erforderlichen Eingabemöglichkeiten an der Eingabe-/Ausgabeeinheit 120 aufweist. Die Bedieneinheit 55 des ersten Endgerätes 5 hingegen weist nur eingeschränkte Eingabemöglichkeit auf.

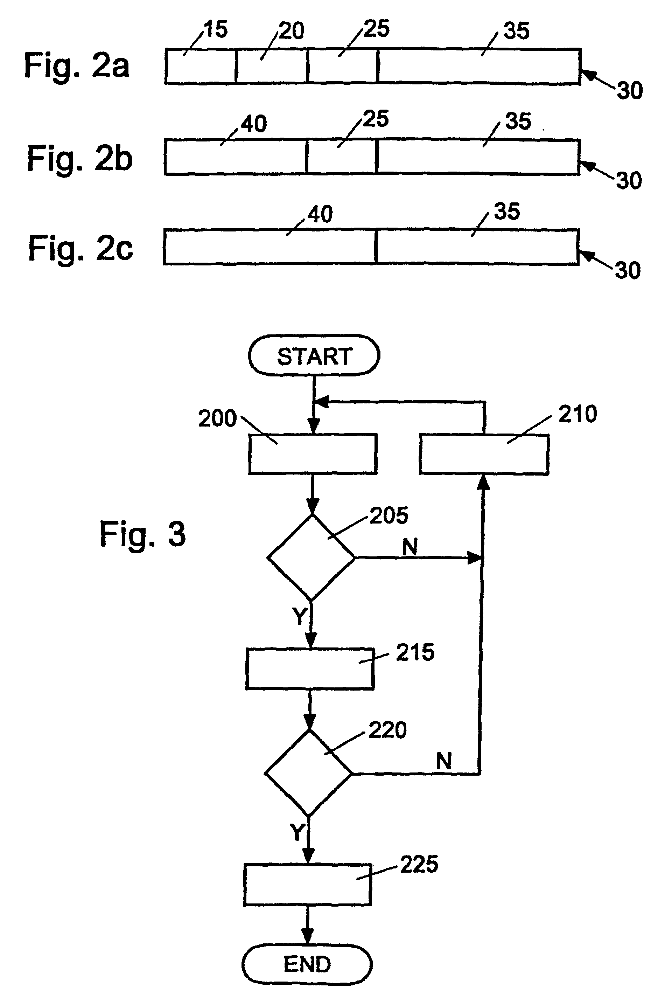

In Figur 3 ist ein Ablaufplan für die Funktionsweise der Steuerung 90 des zweiten Endgerätes 45 dargestellt. Bei einem Programmpunkt 200 wird über das beispielsweise als ISDN-Netz (Integrated Services Data Network) ausgebildete zweite Datennetz 50 von der Steuerung 90 des zweiten Endgerätes 45 über dessen Sende-/Empfangseinheit 100 ein Verbindungsaufbau mit der Sende-/Empfangseinheit 105 der Zentrale 1 angefordert. Bei erfolgreichem Verbindungsaufbau veranlaßt die Steuerung 90 des zweiten Endgerätes 45 aufgrund eines an der Eingabe-/Ausgabeeinheit 120 eingegebenen Befehls seitens eines Benutzers die Sende-/Empfangseinheit 100 des zweiten Endgerätes 45 zur Absendung eines Dienstekonfigurationsaufforderungssignals an die Zentrale 1, mittels dem von der Zentrale 1 ein Angebot über die verfügbaren Dienste und die zugehörigen Diensteoptionen angefordert wird.

Bei Programmpunkt 205 wird geprüft, ob innerhalb einer vorgegebenen Zeit von der Zentrale 1 in der Sende-/Empfangseinheit 100 des zweiten Endgerätes 45 ein Bestätigungssignal mit dem angeforderten Diensteangebot und den zugehörigen Diensteoptionen empfangen wurde. Ist dies der Fall, so wird zu Programmpunkt 215 verzweigt, andernfalls wird zu Programmpunkt 210 verzweigt.

Bei Programmpunkt 210 veranlaßt die Steuerung 90 des zweiten Endgerätes 45 dessen Sende-/Empfangseinheit 100 zum Abbruch der Verbindung mit der Zentrale 1. Anschließend wird zu Programmpunkt 200 zurückverzweigt. Es kann jedoch auch vorgesehen sein, nach Programmpunkt 210 den Programmteil zu verlassen.

Bei Programmpunkt 215 erfolgt an der Eingabe-/Ausgabeeinheit 120 eine Anzeige und/oder akustische Wiedergabe des von der Zentrale 1 empfangenen Diensteangebots mit den zugehörigen Diensteoptionen. Der Benutzer kann an der Eingabe-/Ausgabeeinheit 120 einen der Dienste auswählen und durch Eingabe von Parametern die zugehörigen Diensteoptionen nach seinen Wünschen einstellen. So kann beispielsweise als Dienst eine Überwachung der Verkehrslage gewählt werden und als Parameter kann ein Start- und ein Zielort an der Eingabe-/Ausgabeeinheit 120 eingegeben werden. Weiterhin können Selektionsparameter eingestellt werden, so z. B. wieviel Kilometer im voraus Verkehrsmeldungen berücksichtigt werden sollen. Weiterhin können vom Benutzer an der Eingabe-/Ausgabeeinheit 120 Angaben über die Ausgabemöglichkeiten des ersten Endgerätes 5 und/oder Ausgabeformen eingegeben bzw. vorgegeben werden, wobei die Ausgabeformen gemäß den Ausgabevorlieben des Benutzers eingestellt werden können. So kann z. B. die Sprache für eine Meldungsausgabe am ersten Endgerät 5 gewählt werden. Die Auswahl des Dienstes und die Einstellung der Diensteoptionen wird dann von der Sende-/Empfangseinheit 100 des zweiten Endgerätes 45 in Form eines Dienstekonfigurationsdaten enthaltenden Dienstekonfigurationssignals an die Zentrale 1 abgesendet. Dabei werden mit den Dienstekonfigurationsdaten auch eine Endgerätekennung 20 des ersten Endgerätes 5 und/oder eine Nutzerkennung 25 des Benutzers an die Zentrale 1 übertragen. Die Endgerätekennung 20 und/oder die Nutzerkennung 25 ist dabei vom Benutzer ebenfalls an der Eingabe-/Ausgabeeinheit 120 zusammen mit der Auswahl des Dienstes und den Parametern für die Diensteoptionen einzugeben. Die Endgerätekennung 20 kennzeichnet dabei den Typ bzw. den Leistungsumfang des ersten Endgerätes 5 und die Nutzerkennung 25 stellt eine Nutzeridentifikation dar, mittels der eine Zugangsberechtigung eines Nutzers zu einem oder mehreren von der Zentrale 1 angebotenen Diensten geprüft werden kann und die beispielsweise der Telephonnummer des ersten Endgerätes 5 bei Ausbildung des ersten Endgerätes 5 als Telephon, beispielsweise in einem Autoradio, als Mobiltelephon, als Schnurlostelephon oder dergleichen entsprechen kann. In einem weiteren, in Figur 3 nicht dargestellten Schritt kann von der Zentrale 1 in der Sende-/Empfangseinheit 100 des zweiten Endgerätes 45 ein Bestätigungsaufforderungssignal empfangen werden, wobei der Benutzer an der Eingabe-/Ausgabeeinheit 120 die von der Zentrale 1 in Abhängigkeit des empfangenen Dienstekonfigurationssignals vorgenommene Diensteauswahl und Einstellung der Diensteoptionen bestätigen kann. Bei dem gewählten Beispiel des Dienstes der Überwachung der Verkehrslage kann der Benutzer an der Eingabe-/Ausgabeeinheit 120 beispielsweise eine von der Zentrale 1 vorgeschlagene Fahrtroute und gegebenenfalls weitere von der Zentrale 1 vorgeschlagene Alternativfahrtrouten bestätigen. Weiterhin könnte die Zentrale 1 an das zweite Endgerät 45 ein Korrekturaufforderungssignal absenden, durch das der Benutzer veranlaßt wird, an der Eingabe-/Ausgaheeinheit 120 zuvor getätigte fehlerhafte Eingaben zu korrigieren. So kann beim Beispiel des gewählten Dienstes der Überwachung der Verkehrslage bei Schreibfehlern oder nicht eindeutigen Zielorten von der Zentrale 1 eine erneute Abfrage an das zweite Endgerät 45 mit Vorschlägen zu den womöglich gemeinten Zielorten unterbreitet werden. Weiterhin kann auch vorgesehen sein, daß die Sende-/Empfangseinheit 100 des zweiten Endgerätes 45 von der Zentrale 1 ein Abrechnungssignal empfängt, durch das der Benutzer des zweiten Endgerätes 45 veranlaßt wird, über die Eingabe-/Ausgabeeinheit 120 für einen vom ersten Endgerät 5 genutzten Dienst der Zentrale 1 einen Zahlungsvorgang, beispielsweise in Form eines Abbuchungsauftrages, einzuleiten, der dann an die Zentrale 1 übertragen wird.

Bei Programmpunkt 220 prüft die Steuerung 90 des zweiten Endgerätes 45, ob die Sende-/Empfangseinheit 100 des zweiten Endgerätes 45 ein Bestätigungssignal mit einer Dienstekennung 15 innerhalb einer weiteren vorgegebenen Zeit empfangen hat. Ist dies der Fall, so wird zu Programmpunkt 225 verzweigt, andernfalls wird zu Programmpunkt 210 verzweigt.

Bei Programmpunkt 225 wird die Dienstekennung 15 an der Eingabe-/Ausgabeeinheit 120 ausgegeben, d. h. angezeigt und/oder akustisch wiedergegeben, und außerdem kann die Dienstekennung 15 im Speicher 115 des zweiten Endgerätes 45 abgelegt werden. Die Dienstekennung 15 ist dabei dem vom Benutzer am zweiten Endgerät 45 konfigurierten Dienst in der Zentrale 1 zugeordnet, so daß der auf diese Weise konfigurierte Dienst in der Zentrale 1 mittels der Dienstekennung 15 aktiviert werden kann. Durch das Abspeichern der Dienstekennung 15 im Speicher 115 des zweiten Endgerätes 45 muß sich der Benutzer die dem konfigurierten Dienst zugeordnete Dienstekennung 15 nicht merken, sondern kann sie bei Bedarf durch einen Eingabebefehl an der Eingabe-/Ausgabeeinheit 120 zur Darstellung und/oder akustischen Wiedergabe an der Eingabe-/Ausgabeeinheit 120 bringen. Nach Programmpunkt 225 wird der Programmteil verlassen.

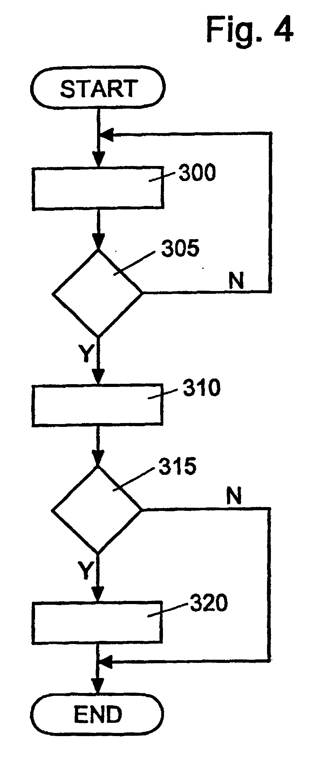

In Figur 4 ist ein Ablaufplan für die Funktionsweise der Steuerung 85 des ersten Endgerätes 5 dargestellt. Bei einem Programmpunkt 300 veranlaßt die Steuerung 85 des ersten Endgerätes 5 aufgrund einer Eingabe des Benutzers an der Bedieneinheit 55 die Sende-/Empfangseinheit 60 des ersten Endgerätes 5 zur Übertragung eines Aufforderungssignals über das erste Datennetz 10 an die Zentrale 1. Das erste Datennetz 10 kann dabei beispielsweise als GSM-Netz (Global System For Mobile Communications) ausgebildet sein. Mit dem Aufforderungssignal kann zusätzlich die Endgerätekennung 20 und/oder die Nutzerkennung 25 an die Zentrale 1 übertragen werden, wobei die Endgerätekennung 20 und die Nutzerkennung 25 im Speicher 70 des ersten Endgerätes 5 abgelegt sein und/oder an der Bedieneinheit 55 eingegeben werden können und von der Steuerung 85 des ersten Endgerätes 5 an die Sende-/Empfangseinheit 60 des ersten Endgerätes 5 zur Aussendung an die Zentrale 1 mittels des Aufforderungssignals weitergeleitet werden können.

Bei einem Programmpunkt 305 prüft die Steuereinheit 85 des ersten Endgerätes 5, ob die Sende-/Empfangseinheit 60 des ersten Endgerätes 5 innerhalb einer vorgegebenen Zeit von der Zentrale 1 ein Dienstekennungssignal empfangen hat, wobei das Dienstekennungssignal Dienstekennungen 15 von durch das erste Endgerät 5 nutzbaren Diensten der Zentrale 1 umfaßt. Ist dies der Fall, so wird zu Programmpunkt 310 verzweigt, andernfalls wird zu Programmpunkt 300 zurückverzweigt oder der Programmteil verlassen.

Bei Programmpunkt 310 kann die Steuerung 85 des ersten Endgerätes 5 eine Speicherung der empfangenen Dienstekennungen 15 im Speicher 70 des ersten Endgerätes 5 veranlassen. Die Steuerung 85 des ersten Endgerätes 5 kann weiterhin eine Anzeige und/oder akustische Wiedergabe der Dienstekennungen 15 mittels der Ausgabeeinheit 65 veranlassen.

Unabhängig vom bisherigen Programmablauf kann das Programm auch bei Programmpunkt 310 dadurch gestartet werden, daß der Benutzer in einem Betriebsmodus des ersten Endgerätes 5 an der Bedieneinheit 55 eine Dienstekennung 15, beispielsweise ein Codewort mittels der Zehnertastatur an der Bedieneinheit 55 eingibt. Weiterhin kann der Benutzer bei Programmpunkt 310 auch an der Bedieneinheit 55 einen Befehl zur Wiedergabe eines Auswahlmenüs an der Ausgabeeinheit 65 eingeben, wobei das Auswahlmenü aus dem Speicher 70 des ersten Endgerätes 5 geladene Dienstekennungen 15 zur Auswahl anbietet. An der Bedieneinheit 55 kann der Benutzer dann durch entsprechende Eingabe zum Beispiel mittels der Cursortasten eine Dienstekennung 15 aus dem Menü auswählen. Den Tasten 75 kann auch jeweils eine Dienstekennung 15 vom Benutzer zugeordnet werden. Durch Betätigung einer entsprechenden Taste 75 wird der ihr zugeordnete Dienst ausgewählt. Die Steuerung 85 des ersten Endgerätes 5 veranlaßt daraufhin die Sende-/Empfangseinheit 60 des ersten Endgerätes 5 zur Absendung eines Aktivierungsdaten 30 enthaltenden Aktivierungssignals an die Zentrale 1, wobei gemäß Figur 2a) die Aktivierungsdaten 30 die gewählte Dienstekennung 15, die Endgerätekennung 20, die Nutzerkennung 25 und gegebenenfalls weitere Zusatzdaten 35 umfassen. Gemäß Figur 2b) können die Dienstekennung 15 und die Endgerätekennung 20 zu einer gemeinsamen Kennung 40 zusammengefaßt sein. Gemäß Figur 2c) können die Dienstekennung 15, die Endgerätekennung 20 und die Nutzerkennung 25 zu einer gemeinsamen Kennung 40 zusammengefaßt sein. Auch beliebige andere Zusammenfassungen zweier Kennungen zu einer gemeinsamen Kennung 40 sind möglich. Wie bereits beschrieben, kann die Nutzerkennung 25 der Telephonnummer des ersten Endgerätes 5 entsprechen, die Endgerätekennung 20 kann den Typ und den Leistungsumfang des ersten Endgerätes 5 kennzeichnen und die gemeinsame Kennung 40 kann beispielsweise eine mit einem die Zentrale 1 betreibenden Diensteanbieter vereinbarte Kundennummer sein, wobei der Diensteanbieter in der Zentrale 1 mittels der vom ersten Endgerät 5 übertragenen Kundennummer erkennen kann, welcher vom Nutzer konfigurierte Dienst aktiviert werden soll und an welches Endgerät der Dienst Informationen liefern soll. Die Zentrale 1 des Diensteanbieters wird durch Empfang der Aktivierungsdaten 30 aufgrund der Dienstekennung 15, der Endgerätekennung 20 und der Nutzerkennung 25 aktiviert, den vom Benutzer gewählten Dienst zu starten, der gegebenenfalls zuvor mittels des zweiten Endgerätes 45 in der Zentrale 1 konfiguriert wurde. Mittels der Endgerätekennung 20 erhält die Zentrale 1 Informationen darüber, an welches Endgerät der mittels der Dienstekennung 15 gewählte Dienst gesendet werden muß und welche Randbedingungen durch den Typ und den Leistungsumfang dieses Endgerätes dabei beachtet werden müssen. Mittels der Nutzerkennung 25 identifiziert sich der Nutzer gegenüber dem Diensteanbieter in der Zentrale 1, der die Berechtigung des Nutzers auf diese Weise prüfen kann.

Bei Programmpunkt 315 wird geprüft, ob von der Zentrale 1 über das erste Datennetz 10 in der Sende-/Empfangseinheit 60 des ersten Endgerätes 5 Dienstedaten innerhalb einer weiteren vorgegebenen Zeit empfangen wurden. Ist dies der Fall, so wird zu Programmpunkt 320 verzweigt, andernfalls wird der Programmteil verlassen.

Bei Programmpunkt 320 veranlaßt die Steuerung 85 des ersten Endgerätes 5 eine Wiedergabe der mit den Dienstedaten von der Zentrale 1 übertragenen Informationen an der Ausgabeeinheit 65, die optisch und/oder akustisch sein kann. Gegebenenfalls veranlaßt die Steuerung 85 des ersten Endgerätes 5 auch eine Speicherung der mit den Dienstedaten übertragenen Informationen in dem Speicher 70 des ersten Endgerätes 5. Anschließend wird der Programmteil verlassen.

Mittels der Aktivierungsdaten 30 können auch Zusatzdaten 35 gemäß Figur 2a), Figur 2b) und Figur 2c) über einen aktuellen Zustand und/oder Ort des ersten Endgerätes 5 an die Zentrale 1 übertragen werden. Bei der Erzeugung der Dienstedaten in der Zentrale 1 können dann die Zusatzdaten 35 berücksichtigt werden, so daß der Zustand und/oder der Ort des ersten Endgerätes 5 bei der Realisierung des ausgewählten Dienstes am ersten Endgerät 5 berücksichtigt wird. Dadurch können zeitlich veränderliche Daten des ersten Endgerätes 5 bei der Aktivierung des gewünschten Dienstes berücksichtigt werden. Dies kann bei dem gewählten Beispiel des Dienstes der Überwachung der Verkehrslage dadurch realisiert sein, daß der beispielsweise als GPS-Empfänger (Global Positioning System) ausgebildete Empfänger 80 für Ortungsdaten die aktuelle Position des ersten Endgerätes 5 anhand empfangener Ortssignale ermittelt und aus den Ortssignalen abgeleitete Ortsdaten mittels der Zusatzdaten 35 an die Zentrale 1 übertragen werden. Die Ortsdaten kennzeichnen dabei den aktuellen Ort des ersten Endgerätes 5. Dadurch können zeitlich veränderliche Zustände und/oder Orte des ersten Endgerätes 5 bei der Aktivierung des gewünschten Dienstes berücksichtigt werden, so daß beim gewählten Beispiel die bereits gefahrene Strecke bei der Überwachung der Verkehrslage nicht mehr berücksichtigt wird, wobei in diesem Beispiel das erste Endgerät 5 beispielsweise in einem Fahrzeug mitgeführt wird.

Mittels der Zusatzdaten 35 kann also ein Teil der für die Konfiguration eines Dienstes notwendigen Daten auch automatisch durch das erste Endgerät 5 generiert und an die Zentrale 1 übertragen werden.

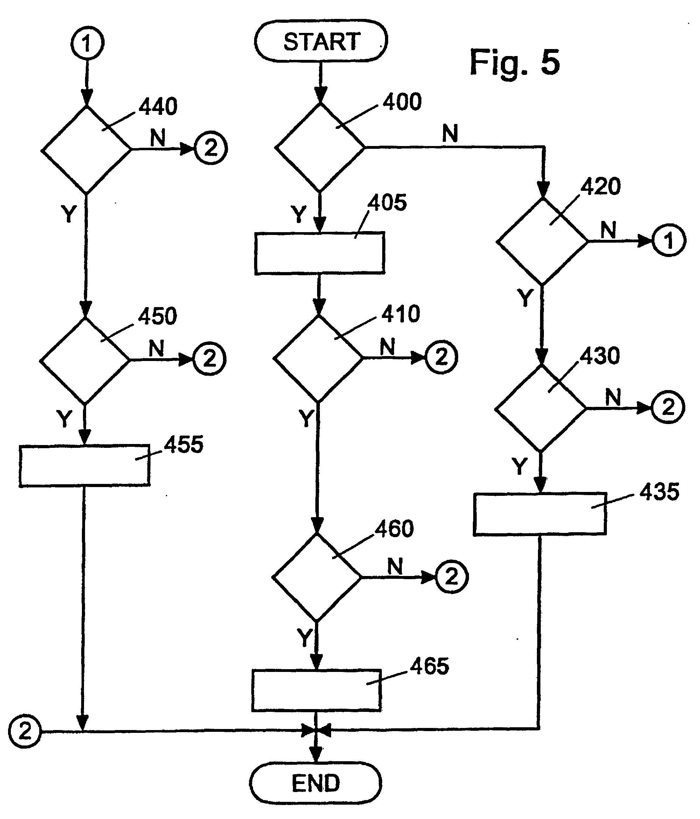

In Figur 5 ist ein Ablaufplan für die Funktionsweise der Steuerung 95 der Zentrale 1 dargestellt. Bei einem Programmpunkt 400 prüft die Steuerung 95 der Zentrale 1, ob innerhalb einer vorgegebenen Zeit ein Dienstekonfigurationsaufforderungssignal von der Sende-/Empfangseinheit 105 der Zentrale 1 empfangen wurde. Ist dies der Fall, so wird zu Programmpunkt 405 verzweigt, andernfalls wird zu Programmpunkt 420 verzweigt.

Bei Programmpunkt 405 werden an den Absender des Dienstekonfigurationsaufforderungssignals, im beschriebenen Beispiel das zweite Endgerät 45, eine Auswahl der von der Zentrale 1 angebotenen Dienste und zugehörigen Diensteoptionen übertragen.

Bei einem Programmpunkt 410 prüft die Steuerung 95 der Zentrale 1, ob die Sende-/Empfangseinheit 105 der Zentrale 1 innerhalb einer weiteren vorgegebenen Zeit ein Dienstekonfigurationssignal empfangen hat. Ist dies der Fall, so wird zu Programmpunkt 460 verzweigt, andernfalls wird der Programmteil verlassen.

Bei Programmpunkt 460 wird mittels der mit dem Dienstekonfigurationssignal übertragenen Nutzerkennung 25 von der Steuerung 95 der Zentrale 1 geprüft, ob die Nutzerkennung 25 mit im Speicher 110 der Zentrale 1 abgespeicherten Nutzerdaten übereinstimmt. Ist dies der Fall, so wird zu Programmpunkt 465 verzweigt, andernfalls wird der Programmteil verlassen. Durch Überprüfung der Nutzerkennung 25 kann somit in der Zentrale 1 des Diensteanbieters die Berechtigung des Nutzers geprüft werden. Liegt keine Nutzerberechtigung vor, so wird der Datenaustausch zwischen der Zentrale 1 und dem zweiten Endgerät 45 von der Zentrale 1 abgebrochen.

Bei Programmpunkt 465 veranlaßt die Steuerung 95 der Zentrale 1 eine Speicherung des vom Nutzer in diesem Beispiel am zweiten Endgerät 45 konfigurierten Dienstes im Speicher 110 der Zentrale 1, in dem auch die mit dem Dienstekonfigurationssignal übertragenen Diensteoptionen bzw. Parameter, die Endgerätekennung 20 und/oder die Nutzerkennung 25 in Zuordnung zu dem ausgewählten Dienst abgelegt werden. Die Steuerung 95 der Zentrale 1 ordnet diesem Dienst eine Dienstekennung 15 zu und speichert sie ebenfalls in Zuordnung zu dem ausgewählten Dienst im Speicher 110 der Zentrale 1 ab. Zur Abspeicherung der vom Benutzer gewählten Diensteoptionen und Parameter werden aus den von der Sende-/Empfangseinheit 105 der Zentrale 1 empfangenen Dienstekonfigurationsdaten Dienstedaten abgeleitet, die diese Diensteoptionen und Parameter umfassen. Bei der Ableitung der Dienstedaten aus den Dienstekonfigurationsdaten werden auch in den Dienstekonfigurationsdaten enthaltene Angaben über Ausgabemöglichkeiten des ersten Endgerätes 5 und/oder am zweiten Endgerät 45 vorgegebene Ausgabeformen berücksichtigt. Die Diensteoptionen und die Parameter und gegebenenfalls die Ausgabemöglichkeiten und/oder -formen werden dann in Form der Dienstedaten im Speicher 110 der Zentrale 1 abgespeichert. Anschließend wird die von der Steuerung 95 der Zentrale 1 dem ausgewählten Dienst zugeordnete Dienstekennung 15 von der Sende-/Empfangseinheit 105 der Zentrale 1 an das zweite Endgerät 45 abgesendet. Nach Programmpunkt 465 wird der Programmteil verlassen.

Bei Programmpunkt 420 prüft die Steuerung 95 der Zentrale 1, ob die Sende-/Empfangseinheit 105 der Zentrale 1 innerhalb einer weiteren vorgegebenen Zeit ein Aufforderungssignal empfangen hat. Ist dies der Fall, so wird zu Programmpunkt 430 verzweigt, andernfalls wird zu Programmpunkt 440 verzweigt.

Bei Programmpunkt 430 prüft die Steuerung 95 der Zentrale 1, ob eine mit dem Aufforderungssignal übertragene Nutzerkennung 25 mit im Speicher 110 der Zentrale 1 gespeicherten Nutzerdaten übereinstimmt. Ist dies der Fall, so wird zu Programmpunkt 435 verzweigt, andernfalls wird der Programmteil verlassen.

Bei Programmpunkt 435 veranlaßt die Steuerung 95 der Zentrale 1 die Sende-/Empfangseinheit 105 der Zentrale 1 dazu, ein Dienstekennungssignal an das das Aufforderungssignal absendende erste Endgerät 5 über das erste Datennetz 10 zu übertragen, wobei das Dienstekennungssignal Dienstekennungen 15 von durch das erste Endgerät 5 nutzbaren Diensten der Zentrale 1 umfaßt. Eine Auswertung, welche von der Zentrale 1 angebotenen Dienste vom ersten Endgerät 5 nutzbar sind, führt die Steuerung 95 der Zentrale 1 anhand der ebenfalls mit dem Aufforderungssignal an die Zentrale 1 übertragenen Endgerätekennung 20 des ersten Endgerätes 5 durch, sofern diese Endgerätekennung 20 mit dem Aufforderungssignal an die Zentrale 1 übertragen wurde. Andernfalls enthält das Dienstekennungssignal, das die Zentrale 1 an das erste Endgerät 5 absendet, die Dienstekennungen 15 aller oder einer Auswahl der von der Zentrale 1 angebotenen Dienste. Durch Auswertung der Endgerätekennung 20 ist jedenfalls die Steuerung 95 der Zentrale 1 in der Lage, dem ersten Endgerät 5 mittels des Dienstekennungssignals nur die Dienste mittels der zugeordneten Dienstekennungen 15 anzubieten, die in Abhängigkeit des Typs und des Leistungsumfangs des durch die Endgerätekennung 20 gekennzeichneten ersten Endgerätes 5 auch nutzbar sind. Nach Programmpunkt 435 wird der Programmteil verlassen.

Bei Programmpunkt 440 wird geprüft, ob innerhalb einer weiteren vorgegebenen Zeit Aktivierungsdaten 30 empfangen wurden. Ist dies der Fall, so wird zu Programmpunkt 450 verzweigt, andernfalls wird der Programmteil verlassen.

Bei Programmpunkt 450 wird geprüft, ob die mit den Aktivierungsdaten 30 an die Zentrale 1 übertragene Nutzerkennung 25 des ersten Endgerätes 5 mit im Speicher 110 der Zentrale 1 abgespeicherten Nutzerdaten übereinstimmt. Ist dies der Fall, so wird zu Programmpunkt 455 verzweigt, andernfalls wird der Programmteil verlassen.

Bei Programmpunkt 455 wählt die Steuerung 95 der Zentrale 1 einen Dienst aus, der im Speicher 110 der Zentrale 1 der mit den Aktivierungsdaten 30 übertragenen Dienstekennung 15 zugeordnet ist. Die entsprechenden Dienstedaten werden aufgerufen und in Abhängigkeit der mit den Aktivierungsdaten 30 übertragenen Endgerätekennung 20 so an den Typ und den Leistungsumfang des ersten Endgerätes 5 angepaßt, daß sie bei Empfang durch das erste Endgerät 5 erkannt werden und Funktionen zur Realisierung des ausgewählten Dienstes am ersten Endgerät 5 auslösen. Für den Fall, daß mit den Aktivierungsdaten 30 Zusatzdaten 35 in der Sende-/Empfangseinheit 105 der Zentrale 1 empfangen wurden, kann die Steuerung 95 der Zentrale 1 die Dienstedaten zusätzlich mit Hilfe der Zusatzdaten 35 aufbereiten, so daß der Zustand und/oder der Ort des ersten Endgerätes 5 bei der Realisierung des ausgewählten Dienstes berücksichtigt wird. Die Steuerung 95 der Zentrale 1 veranlaßt dann die Sende-/Empfangseinheit 105 der Zentrale 1 die auf diese Weise aufbereiteten Dienstedaten über das erste Datennetz 10 an das erste Endgerät 5 zu senden. Anschließend wird der Programmteil verlassen.

Es sind einige vorteilhafte Weiterbildungen des erfindungsgemäßen Verfahrens und des erfindungsgemäßen Endgerätes möglich. Die Dienstekennung 15 kann für eine wiederholte Nutzung des zugeordneten Dienstes im Speicher 70 des ersten Endgerätes 5 gespeichert werden. Weiterhin kann vorgesehen sein, daß der Benutzer an der Bedieneinheit 55 mittels beispielsweise einer alphanumerischen Tastatur einen Text zur Erklärung der Dienstekennung 15 eingibt und eine Speicherung des Textes im Speicher 70 des ersten Endgerätes 5 durch einen Eingabebefehl an der Bedieneinheit 55 veranlaßt. Der Text ist bei einer wiederholten Nutzung des vom Benutzer konfigurierten Dienstes für die Zuordnung dieses Dienstes zu der zugehörigen Dienstekennung 15 hilfreich, da der Benutzer durch den Text leichter den zugehörigen Dienst assoziiert, als dies bei einer vorzugsweise als Codewort oder Codenummer ausgebildeten Dienstekennung 15 der Fall ist. Texte zur Erläuterung zugeordneter Dienstekennungen 15 können auch mit dem Dienstekennungssignal von der Zentrale 1 an das erste Endgerät 5 als Reaktion auf das Aufforderungssignal des ersten Endgerätes 5 übertragen werden. Die Texte können dann anschließend im Speicher 70 des ersten Endgerätes 5 gespeichert werden. Bei einer Auswahl eines zuvor mittels des zweiten Endgerätes 45 in der Zentrale 1 konfigurierten Dienstes können dann die Texte, beispielsweise mit Hilfe einer Menüdarstellung an der Ausgabeeinheit 65 des ersten Endgerätes 5 dargestellt werden, so daß dem Benutzer eine besonders einfache und zeitsparende Möglichkeit zur Auswahl eines solchen Dienstes an der Bedieneinheit 55 möglich ist, die dann das Absenden der zu dem Text gehörigen Dienstekennung 15 des ausgewählten Dienstes an die Zentrale 1 mittels der entsprechenden Aktivierungsdaten 30 zur Folge hat. Anstelle der Dienstekennung 15 kann auch direkt der zugehörige Text an die Zentrale 1 übertragen werden. Im Speicher 110 der Zentrale 1 sind dann den einzelnen über das zweite Endgerät 45 konfigurierten Dienste die entsprechend zugeordneten Texte ebenfalls abzuspeichern und mit dem vom ersten Endgerät 5 an die Zentrale 1 übertragenen Text durch die Steuerung 95 der Zentrale 1 zu vergleichen, so daß auf diese Weise in der Zentrale 1 der am ersten Endgerät 5 gewählte Dienst ermittelt wird und die zugehörigen Dienstedaten aus dem Speicher 110 der Zentrale 1 für eine Übertragung an das erste Endgerät 5 aufgerufen werden können. Für den Benutzer des ersten Endgerätes 5 entfällt somit die Eingabe einer Dienstekennung 15 an der Bedieneinheit 55, so daß er nur den dem ausgewählten Dienst zugeordneten Text an der Bedieneinheit 55 eingeben oder anhand der Menüdarstellung an der Ausgabeeinheit 65 auswählen muß. Anstelle oder zusätzlich zu einem Verzeichnis mit stichwortartigen Beschreibungen der nutzerkonfigurierten Dienste durch Texte kann eine Zuordnung dieser Dienste zu den Tasten 75 des ersten Endgerätes 5 erfolgen, von denen in Figur 1 fünf dargestellt sind und die beispielsweise als Stationstasten eines Autoradios insbesondere mit integriertem Telephon ausgebildet sein können. Die Ablage von bestimmten Diensten auf den Tasten 75 erleichtert die Auswahl vor allem von sehr häufig genutzten Diensten für den Benutzer.

Ein Vorteil bei der Konfiguration eines Dienstes durch das zweite Endgerät 45 besteht auch darin, daß unabhängig vom ersten Datennetz 10 die Konfiguration des Dienstes über ein zweites Datennetz 50 erfolgen kann, wobei für das zweite Datennetz 50 ein Datennetz mit möglichst kostengünstiger Kommunikation gewählt werden kann, so daß Kosten bei der Konfiguration des Dienstes in der Zentrale 1 eingespart werden können, vor allem dann, wenn die Kommunikation über das erste Datennetz 10 und damit eine Konfiguration eines Dienstes in der Zentrale 1 durch das erste Endgerät 5 teurer ist.

In einer weiteren Ausführungsform kann die Funktionalität des zweiten Endgerätes 45 zusätzlich oder alternativ auch in die Zentrale 1 integriert sein, so daß eine Dienstekonfiguration auch ohne Verwendung eines Datennetzes für den Datenaustausch zwischen dem zweiten Endgerät 45 und der Zentrale 1 möglich ist. Die Dienstekonfigurationsdaten mit Parametern zur Einstellung eines vom ersten Endgerät 5 nutzbaren und von der Zentrale 1 angebotenen Dienstes können dabei direkt an der Zentrale 1 mit der Endgerätekennung 20 und/oder der Nutzerkennung 25 des ersten Endgerätes 5 eingegeben werden. Von den Dienstekonfigurationsdaten werden dann in der Zentrale 1 Dienstedaten abgeleitet und mit der Endgerätekennung 20 und/oder mit der Nutzerkennung 25 in der Zentrale 1 gespeichert. Eine Dienstekennung 15 wird den Dienstedaten zugeordnet und mit ihnen in der Zentrale 1 abgespeichert. Die Zentrale 1 umfaßt bei dieser Ausführungsform die Funktionalität eines Endgerätes und stellt somit ein Endgerät mit erweiterter Funktionaltität dar.

## Patentansprüche

1. Verfahren zur Nutzung von einer Zentrale (1) angebotener Dienste durch ein erstes Endgerät (5), wobei vom ersten Endgerät (5) Aktivierungsdaten (30) über ein erstes Datennetz (10) an die Zentrale (1) übertragen werden, **dadurch gekennzeichnet, daß** mittels der Aktivierungsdaten (30) eine Dienstekennung (15) und eine Endgerätekennung (20), **die den Typ und den Leistungsumfang des ersten Endgerätes (5) kennzeichnet,** an die Zentrale (1) übertragen werden, daß in Abhängigkeit der Dienstekennung (15) ein Dienst in der Zentrale (1) ausgewählt wird, daß in Abhängigkeit der Endgerätekennung (20) von der Zentrale (1) dem ausgewählten Dienst entsprechende Dienstedaten gesendet werden, so daß sie bei Empfang durch das erste Endgerät (5) erkannt werden und Funktionen zur Realisierung des ausgewählten Dienstes am ersten Endgerät (5) auslösen und daß die Dienstedaten von der Zentrale (1) an das erste Endgerät (5) über das erste Datennetz (10) übertragen werden.

2. Verfahren nach Anspruch 1, **dadurch gekennzeichnet, daß** mittels der Aktivierungsdaten (30) eine Nutzerkennung (25) an die Zentrale (1) übertragen wird und daß die Dienstedaten nur dann von der Zentrale (1) an das erste Endgerät (5) übertragen werden, wenn die Nutzerkennung (25) mit in der Zentrale (1) abgespeicherten Nutzerdaten übereinstimmt.

3. Verfahren nach Anspruch 1 oder 2, **dadurch gekennzeichnet, daß** vom ersten Endgerät (5) ein Aufforderungssignal mit der Endgerätekennung (20) und/oder Nutzerkennung (25) über das erste Datennetz (10) an die Zentrale (1) übertragen wird und daß von der Zentrale (1) in Abhängigkeit des empfangenen Aufforderungssignals ein Dienstekennungssignal über das erste Datennetz (10) an das erste Endgerät (5) übertragen wird, wobei das Dienstekennungssignal Dienstekennungen (15) von durch das erste Endgerät (5) nutzbaren Diensten der Zentrale (1) umfaßt.

4. Verfahren nach Anspruch 1, 2 oder 3, **dadurch gekennzeichnet, daß** mittels der Aktivierungsdaten (30) Zusatzdaten (35) über einen Zustand und/oder Ort des ersten Endgerätes (5) an die Zentrale (1) übertragen werden und daß die Dienstedaten in Abhängigkeit der Zusatzdaten (35) von der Zentrale (1) erzeugt werden, so daß der Zustand und/oder Ort des ersten Endgerätes (5) bei der Realisierung des ausgewählten Dienstes berücksichtigt wird.

5. Verfahren nach einem der vorherigen Ansprüche, **dadurch gekennzeichnet, daß** die Dienstekennung (15), die Endgerätekennung (20) und/oder die Nutzerkennung (25) zu einer einzigen gemeinsamen Kennung (40) zusammengefaßt werden.

6. Verfahren nach einem der vorherigen Ansprüche, **dadurch gekennzeichnet, daß** an der Zentrale (1) Dienstekonfigurationsdaten mit Parametern zur Einstellung eines vom ersten Endgerät (5) nutzbaren und von der Zentrale (1) angebotenen Dienstes eingegeben werden, daß mit den Dienstekonfigurationsdaten die Endgerätekennung (20) und/oder die Nutzerkennung (25) des ersten Endgerätes (5) an der Zentrale (1) eingegeben wird, daß von den Dienstekonfigurationsdaten Dienstedaten abgeleitet und mit der Endgerätekennung (20) und/oder mit der Nutzerkennung (25) in der Zentrale (1) gespeichert werden und daß eine Dienstekennung (15) den Dienstedaten zugeordnet und mit ihnen in der Zentrale (1) abgespeichert wird.

7. Verfahren nach einem der vorherigen Ansprüche, **dadurch gekennzeichnet, daß** von einem zweiten Endgerät (45) Dienstekonfigurationsdaten mit Parametern zur Einstellung eines vom ersten Endgerät (5) nutzbaren und von der Zentrale (1) angebotenen Dienstes über ein zweites Datennetz (50) an die Zentrale (1) übertragen werden, daß mit den Dienstekonfigurationsdaten die Endgerätekennung (20) und/oder die Nutzerkennung (25) des ersten Endgerätes (5) an die Zentrale (1) übertragen wird, daß von den Dienstekonfigurationsdaten Dienstedaten abgeleitet und mit der Endgerätekennung (20) und/oder mit der Nutzerkennung (25) in der Zentrale (1) gespeichert werden und daß eine Dienstekennung (15) den Dienstedaten zugeordnet, mit ihnen in der Zentrale (1) abgespeichert und über das zweite Datennetz (50) an das zweite Endgerät (45) übertragen wird.

8. Verfahren nach Anspruch 7, **dadurch gekennzeichnet, daß** mit den Dienstekonfigurationsdaten Angaben über Ausgabemöglichkeiten des ersten Endgerätes (5) und/oder über vorgebbare Ausgabeformen übertragen werden.

9. Verfahren nach Anspruch 7 oder 8, **dadurch gekennzeichnet, daß** für das erste und das zweite Datennetz (10, 50) ein gemeinsames Datennetz verwendet wird.

10. Verfahren nach Anspruch 7, 8 oder 9, **dadurch gekennzeichnet, daß** mit den an das erste Endgerät (5) übertragenen Dienstedaten in Abhängigkeit eines am zweiten Endgerät (45) vorgegebenen und mit den Dienstekonfigurationsdaten an die Zentrale (1) übertragenen Zielortes und eines vom ersten Endgerät (5) mit den Zusatzdaten (35) an die Zentrale (1) übertragenen aktuellen Ortes des ersten Endgerätes (5) eine Überwachung der Verkehrslage vom aktuellen Ort des ersten Endgerätes (5) bis zum Zielort am ersten Endgerät (5) realisiert wird.

11. Endgerät (5), insbesondere Telefonendgerät oder Mobilfunkgerät, mit einer Bedieneinheit (55) und einer Sende-/Empfangseinrichtung (60) zum Senden und Empfangen von Daten über ein Datennetz (10), wobei ein Betriebsmodus **zur Eingabe** einer Dienstekennung (15) an der Bedieneinheit (55), insbesondere über eine Zehnertastatur, vorgesehen ist, **dadurch gekennzeichnet, daß** nach Eingabe der Dienstekennung (15) **durch** die Sende-/Empfangseinrichtung (60) **ein Absenden von** Aktivierungsdaten (30) mit der Dienstekennung (15) und einer das Endgerät (5) identifizierenden Endgerätekennung (20), **die den Typ und den Leistungsumfang des Endgerätes (5) kennzeichnet,** an eine Zentrale (1) zur Auswahl eines der Dienstekennung (15) zugeordneten Dienstes **erfolgt**.

12. Endgerät (5) nach Anspruch 11, **dadurch gekennzeichnet, daß** die Sende-/Empfangseinrichtung (60) mit den Aktivierungsdaten (30) eine Nutzerkennung (25) an die Zentrale (1) zur Überprüfung einer Nutzungsberechtigung für den ausgewählten Dienst absendet.

13. Endgerät (5) nach Anspruch 11 oder 12, **dadurch gekennzeichnet, daß** nach Empfang eines Dienstesignals durch die Sende-/Empfangseinrichtung (60) eine Ausgabe des ausgewählten Dienstes an einer Ausgabeeinheit (65) erfolgt.

14. Endgerät (5) nach Anspruch 11, 12 oder 13, **dadurch gekennzeichnet, daß** ein Speicher (70) vorgesehen ist, in dem mindestens eine Dienstekennung (15) speicherbar ist.

15. Endgerät (5) nach einem der Ansprüche 11 bis 14, **dadurch gekennzeichnet, daß** an der Bedieneinheit (55) mindestens ein Text, vorzugsweise über eine alphanumerische Tastatur, eingebbar ist, daß der mindestens eine Text einer Dienstekennung (15) zuordenbar ist und daß der mindestens eine Text im Speicher (70) ablegbar und nach Einstellung des Betriebsmodus an der Ausgabeeinheit (65) ausgebbar ist.

16. Endgerät (5) nach Anspruch 15, **dadurch gekennzeichnet, daß** sämtliche im Speicher (70) gespeicherten Texte in dem Betriebsmodus an der Ausgabeeinheit (65) ausgebbar sind, daß einer der ausgebbaren Texte an der Bedieneinheit (55) auswählbar ist und daß nach Auswahl eines Textes die Sende-/Empfangseinrichtung (60) Aktivierungsdaten (30) mit einer dem ausgewählten Text zugeordneten Dienstekennung (15) absendet.

17. Endgerät (5) nach einem der Ansprüche 11 bis 16, **dadurch gekennzeichnet, daß** an der Bedieneinheit (55) ein Aufforderungsbefehl eingebbar ist und daß die Sende-/Empfangseinrichtung (60) nach Eingabe des Aufforderungsbefehls ein Aufforderungssignal mit der Endgerätekennung (20) an die Zentrale (1) zur Anforderung der über die Zentrale (1) verfügbaren Dienste für das Endgerät (5) absendet.

18. Endgerät (5) nach einem der Ansprüche 11 bis 17, **dadurch gekennzeichnet, daß** nach Empfang eines Dienstekennungssignals durch die Sende-/Empfangseinrichtung (60) eine Ausgabe von aus dem Dienstekennungssignal abgeleiteten Dienstekennungen (15) an der Ausgabeeinheit (65) und/oder eine Speicherung dieser Dienstekennungen (15) im Speicher (70) erfolgt.

19. Endgerät (5) nach einem der Ansprüche 11 bis 18, **dadurch gekennzeichnet, daß** die Dienstekennungen (15) in Textform vorliegen.

20. Endgerät (5) nach einem der Ansprüche 11 bis 19, **dadurch gekennzeichnet, daß** im Speicher (70) abgelegte Dienstekennungen (15) an der Ausgabeeinheit (65) ausgebbar und über die Bedieneinheit (55) auswählbar sind und daß nach Auswahl einer Dienstekennung (15) die Sende-/Empfangseinrichtung (60) Aktivierungsdaten (30) mit der Dienstekennung (15) absendet.

21. Endgerät (5) nach einem der Ansprüche 11 bis 20, **dadurch gekennzeichnet, daß** an der Bedieneinheit (55) mindestens eine Taste (75) vorgesehen ist, der eine Dienstekennung (15) zuordenbar ist, und daß nach Betätigung der mindestens einen Taste (75) die Sende-/Empfangseinrichtung (60) Aktivierungsdaten (30) mit der zugeordneten Dienstekennung (15) absendet.

22. Endgerät (5) nach einem der Ansprüche 11 bis 21, **dadurch gekennzeichnet, daß** die Sende-/Empfangseinrichtung (60) mit den Aktivierungsdaten (30) Zusatzdaten (35) absendet, die in Abhängigkeit eines aktuellen Zustandes und/oder Ortes des Endgerätes (5) erzeugt werden.

23. Endgerät (5) nach Anspruch 22, **dadurch gekennzeichnet, daß** ein Empfänger (80) für Ortungsdaten, vorzugsweise ein GPS-Empfänger (Global Positioning System) vorgesehen ist und daß die Zusatzdaten (35) von von dem Empfänger (80) für Ortungsdaten empfangenen Ortssignalen abgeleitete Ortsdaten umfassen, die den aktuellen Ort des Endgerätes (5) kennzeichnen.

## Claims

1. Method for the utilization of services offered by a centre (1) by a first terminal (5), where activation data (30) are transmitted from the first terminal (5) to the centre (1) via a first data network (10), **characterized in that** a service identifier (15) and a terminal identifier (20), which characterizes the type and the range of performances of the first terminal (5), are transmitted to the centre (1) by means of the activation data (30), **in that** a service is selected in the centre (1) in dependence on the service identifier (15), **in that** service data corresponding to the selected service are transmitted by the centre (1) in dependence on the terminal identifier (20) so that they are detected on reception by the first terminal (5) and trigger functions for implementing the selected service at the first terminal (5), and **in that** the service data are transmitted from the centre (1) to the first terminal (5) via the first data network (10).

2. Method according to Claim 1, **characterized in that** a user identifier (25) is transmitted to the centre (1) by means of the activation data (30) and **in that** the service data are only transmitted from the centre (1) to the first terminal (5) when the user identifier (25) corresponds to the user data stored in the centre (1).

3. Method according to Claim 1 or 2, **characterized in that** a request signal with the terminal identifier (20) and/or user identifier (25) is transmitted from the first terminal (5) to the centre (1) via the first data network (10), and **in that** a service identifier signal is transmitted from the centre (1) to the first terminal (5) via the first data network (10) in dependence on the request signal received, the service identifier signal comprising service identifiers (15) of services of the centre (1) which can be utilized by the first terminal (5).

4. Method according to Claim 1, 2 or 3, **characterized in that** supplementary data (35) about a state and/or location of the first terminal (5) are transmitted to the centre (1) by means of the activation data (30), and **in that** the service data are generated by the centre (1) in dependence on the supplementary data (35) so that the state and/or location of the first terminal (5) is taken into consideration in the implementation of the selected service.

5. Method according to one of the preceding Claims, **characterized in that** the service identifier (15), the terminal identifier (20) and/or the user identifier (25) are combined to form a single common identifier (40).

6. Method according to one of the preceding Claims, **characterized in that** service configuration data with parameters for adjusting a service which can be utilized by the first terminal (5) and is offered by the centre (1) are input at the centre (1), that, together with the service configuration data, the, terminal identifier (20) and/or the user identifier (25) of the first terminal (5) is input at the centre (1), **in that** service data are derived from the service configuration data and are stored, together with the terminal identifier (20) and/or with the user identifier (25), in the centre (1) and **in that** a service identifier (15) is allocated to the service data and is stored together with these in the centre (1).

7. Method according to one of the preceding Claims, **characterized in that** service configuration data with parameters for adjusting a service, which can be utilized by the first terminal (5) and is offered by the centre (1), are transmitted to the centre (1) via a second data network (50) from a second terminal (45), **in that**, together with the service configuration data, the terminal identifier (20) and/or the user identifier (25) of the first terminal (5) is transmitted to the centre (1), **in that** service data are derived from the service configuration data and are stored, together with the terminal identifier (20) and/or with the user identifier (25), in the centre (1) and **in that** a service identifier (15) is allocated to the service data, stored together with these in the centre (1) and is transmitted to the second terminal (45) via the second data network (50).

8. Method according to Claim 7, **characterized in that**, together with the service configuration data, information about outputting capabilities of the first terminal (5) and/or about predeterminable output forms are transmitted.

9. Method according to Claim 7 or 8, **characterized in that** a common data network is used for the first and second data network (10, 50).

10. Method according to Claim 7, 8 or 9, **characterized in that**, together with the service data transmitted to the first terminal (5), a monitoring of the traffic situation from the current location of the first terminal (5) to the destination is implemented at the first terminal (5) in dependence on a destination predetermined at the second terminal (45) and transmitted to the centre (1) together with the service configuration data and on a current location of the first terminal (5) transmitted to the centre (1) from the first terminal (5) together with the supplementary data (35).

11. Terminal (5), particularly telephone terminal or mobile radio, comprising an operating unit (55) and a transceiver device (60) for transmitting and receiving data via a data network (10), where an operating mode for inputting a service identifier (15) at the operating unit (55), particularly via a numeric keypad, is provided, **characterized in that** after the service identifier (15) has been input, activation data (30) containing the service identifier (15) and a terminal identifier (20) identifying the terminal (5), which characterizes the type and the range of performances of the terminal (5), are transmitted by the transceiver device (60) to a centre (1) for selecting a service associated with the service identifier (15).

12. Terminal (5) according to Claim 11, **characterized in that** the transceiver device (60) transmits, together with the activation data (30), a user identifier (25) to the centre (1) for checking a service access authorization for the selected service.

13. Terminal (5) according to Claim 11 or 12, **characterized in that** after a service signal has been received by the transceiver device (60) the selected service is output at an output unit (65).

14. Terminal (5) according to Claim 11, 12 or 13, **characterized in that** a memory (70) is provided in which at least one service identifier (15) can be stored.

15. Terminal (5) according to one of Claims 11 to 14, **characterized in that** at least one text can be input at the operating unit (55), preferably via an alphanumeric keypad, **in that** the at least one text can be allocated to a service identifier (15), and **in that** the at least one text can be stored in the memory (70) and can be output at the output unit (65) after setting the operating mode.

16. Terminal (5) according to Claim 15, **characterized in that** all texts stored in the memory (70) can be output at the output unit (65) in the operating mode, **in that** one of the texts which can be output can be selected at the operating unit (55), and **in that**, after selection of a text, the transceiver device (60) transmits activation data (30) with a service identifier (15) allocated to the selected text.

17. Terminal (5) according to one of Claims 11 to 16, **characterized in that** a request instruction can be input at the operating unit (55) and **in that** the transceiver device (60), after the input of the request instruction, transmits a request signal with the terminal identifier (20) to the centre (1) for requesting the services available via the centre (1) for the terminal (5).

18. Terminal (5) according to one of Claims 11 to 17, **characterized in that**, after a service identifier signal has been received by the transceiver device (60), service identifiers (15) derived from the service identifier signal are output at the output unit (65) and/or these service identifiers (15) are stored in the memory (60).

19. Terminal (5) according to one of Claims 11 to 18, **characterized in that** the service identifiers (15) are available in text form.

20. Terminal (5) according to one of Claims 11 to 19, **characterized in that** service identifiers (15) stored in the memory (70) can be output at the output unit (65) and selected via the operating unit (55), and **in that**, after selection of a service identifier (15), the transceiver device (60) transmits activation data (30) with the service identifier (15).

21. Terminal (5) according to one of Claims 11 to 20, **characterized in that** at the operating unit (55), at least one key (75) is provided which can be allocated to a service identifier (15), and **in that**, after operation of the at least one key (75), the transceiver device (60) transmits activation data (30) with the associated service identifier (15).

22. Terminal (5) according to one of Claims 11 to 21, **characterized in that** the transceiver device (60) transmits, together with the activation data (30), supplementary data (35) which are generated in dependence on a current state and/or location of the terminal (5).

23. Terminal (5) according to Claim 22, **characterized in that** a receiver (80) for positioning data, preferably a GPS (global positioning system) receiver is provided, and **in that** the supplementary data (35) comprise location data, derived from location signals received by the receiver (80) for positioning data, which characterize the current location of the terminal (5).

## Revendications

1. Procédé pour l'utilisation par un premier terminal (5) des services offerts par une centrale (1), selon lequel le premier terminal (5) transmet des données d'activation (30) vers la centrale (1) par l'intermédiaire d'un premier réseau de données (10),
**caractérisé en ce qu'**
- à l'aide des données d'activation (30) on transmet à la centrale (1) une caractéristique de service (15) et une caractéristique de terminal (20) qui définissent le type et l'importance de l'activité du premier terminal (5),
- en fonction de la caractéristique de service (15) on sélectionne un service dans la centrale (1),
- en fonction de la caractéristique de terminal (20), la centrale (1) envoie des données de service correspondant au service sélectionné pour qu'à la réception par le premier terminal (5), ces données puissent être reconnues et déclencher des fonctions pour réaliser le service sélectionné dans le premier terminal (5) et
- les données de service sont transmises par la centrale (1) au premier terminal (5) par le premier réseau de données (10).

2. Procédé selon la revendication 1,
**caractérisé en ce qu'**
on transmet une caractéristique d'utilisateur (25) à la centrale (1) avec les données d'activation (30) et
les données de service ne sont transmises par la centrale (1) vers le premier terminal (5) que si la caractéristique d'utilisateur (25) correspond aux données d'utilisateur enregistrées dans la centrale (1).

3. Procédé selon l'une quelconque des revendications 1 ou 2,
**caractérisé en ce que**
le premier terminal (5) transmet un signal de requête avec la caractéristique de terminal (20) et/ou la caractéristique d'utilisateur (25) par le premier réseau de données (10) vers la centrale (1) et, en fonction du signal de requête reçu, la centrale (1) transmet un signal de caractéristique de service par l'intermédiaire du premier réseau de données (10) vers le premier terminal (5),
le signal de caractéristique de service comprenant les caractéristiques (15) des services de la centrale (1) utilisables par le premier terminal (5).

4. Procédé selon l'une quelconque des revendications 1, 2 ou 3,
**caractérisé en ce qu'**
on transmet des données supplémentaires (35) concernant l'état et/ou la localisation du premier terminal (5) vers la centrale (1) à l'aide des données d'activation (30) et
on génère les données de service en fonction des données supplémentaires (35) par la centrale (1) pour tenir compte de l'état et/ou de la localisation du premier terminal (5) dans la réalisation du service sélectionné.

5. Procédé selon l'une quelconque des revendications précédentes,
**caractérisé en ce que**
la caractéristique de service (15), la caractéristique de terminal (20) et/ou la caractéristique d'utilisateur (25) sont regroupées sous la forme d'une unique caractéristique commune (40).

6. Procédé selon l'une quelconque des revendications précédentes,
**caractérisé en ce que**
- la centrale (1) reçoit des données de configuration de service avec des paramètres pour régler un service offert par la centrale (1) et utilisable par le premier terminal (5),
- on introduit la caractéristique de terminal (20) et/ou la caractéristique d'utilisateur (25) du premier terminal (5) dans la centrale (1) avec les données de configuration de service,
- à partir des données de configuration de service on extrait des données de service et on les enregistre dans la centrale (1) avec la caractéristique de terminal (20) et/ou la caractéristique d'utilisateur (25) et
- on associe une caractéristique de service (15) aux données de service et on l'enregistre avec celles-ci dans la centrale (1).

7. Procédé selon l'une quelconque des revendications précédentes,
**caractérisé en ce qu'**
- un second terminal (45) transmet, par un second réseau de données (50) à la centrale (1), des données de configuration de service avec des paramètres de réglage d'un service offert par la centrale (1) et utilisable par le premier terminal (5),
- les données de configuration de service transmettent la caractéristique de terminal (20) et/ou la caractéristique d'utilisateur (25) du premier terminal (5) à la centrale (1),
- à partir des données de configuration de service, des données de service sont extraites et enregistrées avec la caractéristique de terminal (20) et/ou avec la caractéristique d'utilisateur (25) dans la centrale (1) et
- une caractéristique de service (15) est associée aux données de service pour être enregistrée avec celles-ci dans la centrale (1) et être transmise par le second réseau de données (50) au second terminal (45).

8. Procédé selon la revendication 7,
**caractérisé en ce qu'**
avec les données de configuration de service on transmet des indications concernant les possibilités d'émission du premier terminal (5) et/ou des formes d'émission prédéterminées.

9. Procédé selon l'une quelconque des revendications 7 ou 8,
**caractérisé en ce que**
pour le premier et le second réseau de données (10, 50) on utilise un réseau de données commun.

10. Procédé selon l'une quelconque des revendications 7, 8 ou 9,
**caractérisé en ce que**
le premier terminal (5) surveille la situation de circulation entre la localisation actuelle du premier terminal (5) jusqu'à la destination, avec les données de service transmises au premier terminal (5), en fonction d'un lieu de destination prédéterminé par un second terminal (45) et transmis avec les données de configuration de service à la centrale (1), et en fonction d'un lien actuel transmis par le premier terminal (5) avec les données supplémentaires (35) à la centrale (1).

11. Terminal (5), notamment terminal téléphonique ou téléphone mobile comportant :
- une unité de commande (55) et une installation d'émission/réception (60) pour émettre et recevoir des données par un réseau de données (10),
- un mode de fonctionnement pour introduire une caractéristique de service (15) par l'unité de commande (55) notamment un clavier décimal,
**caractérisé en ce qu'**
après introduction de la caractéristique de service (15) l'installation d'émission/réception (60) envoie des données d'activation (30) avec la caractéristique de service (15) et une caractéristique de terminal (20) identifiant le terminal (5), cette caractéristique de terminal définissant le type et l'activité du terminal (5), vers une centrale (1) pour sélectionner l'un des services associé à la caractéristique de service (15).

12. Terminal (5) selon la revendication 11,
**caractérisé en ce que**
l'installation d'émission/réception (60) émet avec les données d'activation (30) une caractéristique d'utilisateur (25) vers la centrale (1) pour contrôler l'autorisation d'utilisation du service sélectionné.

13. Terminal (5) selon l'une quelconque des revendications 11 ou 12,
**caractérisé en ce qu'**
après la réception d'un signal de service par l'installation d'une émission/réception (60), une unité de sortie (65) envoie le service sélectionné.

14. Terminal (5) selon l'une quelconque des revendications 11, 12, 13,
**caractérisé par**
une mémoire (70) contenant au moins une caractéristique de service (15).

15. Terminal (5) selon l'une quelconque des revendications 11 à 14,
**caractérisé en ce que**
- l'unité de commande (55) permet d'introduire au moins un texte, de préférence par un clavier alphanumérique,
- ce texte est associé à une caractéristique de service (15), et
- ce texte peut être enregistré dans la mémoire (70) et émis par l'unité de sortie (65)après réglage du mode de fonctionnement.

16. Terminal (5) selon l'une quelconque des revendications 11 à 14,
**caractérisé en ce que**
- tous les textes enregistrés dans la mémoire (70) peuvent être émis en mode de fonctionnement vers l'unité de sortie (65),
- l'un des textes susceptible d'être êmis est sélectionné par l'unité de commande (55) et
- après la sélection d'un texte, l'installation d'émission/réception (60) envoie des données d'activation (30) avec une caractéristique de service (15) associée au texte sélectionné.

17. Terminal (5) selon l'une quelconque des revendications 11 à 16,
**caractérisé en ce qu'**
un ordre de requête est introduit dans l'unité de commande (55) et l'installation d'émission/réception (60) après introduction de l'ordre de requête, envoie un signal de requête avec la caractéristique du terminal (20) à la centrale (1) pour demander les services disponibles pour le terminal (5) à la centrale (1).

18. Terminal (5) selon l'une quelconque des revendications 11 à 17,
**caractérisé en ce qu'**
après la réception d'un signal de caractéristique de service par l'installation d'émission/réception (60), les caractéristiques de service (15) extraites du signal de caractéristique de service sont fournies à l'unité de sortie (65) et/ou enregistrées dans la mémoire (70).

19. Terminal (5) selon l'une quelconque des revendications 11 à 18,
**caractérisé en ce que**
les caractéristiques de service (15) existent sous la forme d'un texte.

20. Terminal (5) selon l'une quelconque des revendications 11 à 19,
**caractérisé en ce que**
les caractéristiques de service (15) enregistrées dans la mémoire (70) peuvent être sorties vers l'unité de sortie (65) et être sélectionnées par l'unité de commande (55), et après la sélection d'une caractéristique de service (15), l'installation d'émission/réception (60) émet des données d'activation (30) avec la caractéristique de service (15).

21. Terminal (5) selon l'une quelconque des revendications 11 à 20,
**caractérisé en ce que**
l'unité de commande (55) comporte au moins une touche (75) associée à une caractéristique de service (15) et
après actionnement d'au moins une touche (75), l'installation d'émission/réception (60) émet des données d'activation (30) avec la caractéristique de service (15), associée.

22. Terminal (5) selon l'une quelconque des revendications 11 à 21,
**caractérisé en ce que**
l'installation d'émission/réception (60) envoie avec les données d'activation (30), des données supplémentaires (35) générées en fonction de l'état actuel et/ou de la localisation du terminal (5).

23. Terminal (5) selon la revendication 22,
**caractérisé par**
un récepteur (80) pour les données de localisation, de préférence un récepteur GPS (système de positionnement global) et les données supplémentaires (35) comprennent des données de localisation déduites des signaux de localisation reçus par le récepteur (80) pour les données de localisation, et qui caractérisent l'emplacement actuel du terminal (5).
